(19) Europäisches Patentamt
European Patent Office
Office européen des brevets

(11) Veröffentlichungsnummer: **0 058 380**
**A2**

# (12) EUROPÄISCHE PATENTANMELDUNG

(21) Anmeldenummer: 82100937.0

(22) Anmeldetag: 09.02.82

(51) Int. Cl.³: **C 08 L 25/00**
C 08 L 71/04

(30) Priorität: 18.02.81 DE 3105947

(43) Veröffentlichungstag der Anmeldung:
25.08.82 Patentblatt 82/34

(84) Benannte Vertragsstaaten:
BE DE FR GB NL

(71) Anmelder: **BASF Aktiengesellschaft**
**Carl-Bosch-Strasse 38**
**D-6700 Ludwigshafen(DE)**

(72) Erfinder: **Brandstetter, Franz, Dr.**
**Ritterbuechel 45**
**D-6730 Neustadt(DE)**

(72) Erfinder: **Haaf, Franz, Dr.**
**Leistadter Strasse 9**
**D-6702 Bad Duerkheim(DE)**

(72) Erfinder: **Muench, Volker, Dr.**
**Luitpoldstrasse 114**
**D-6700 Ludwigshafen(DE)**

(72) Erfinder: **Naarmann, Herbert, Dr.**
**Haardtblick 15**
**D-6719 Wattenheim(DE)**

## (54) Selbstverlöschende thermoplastische Formmassen.

(57) Die Erfindung bezieht sich auf selbstverlöschende thermoplastische Formmassen, enthaltend (A) ein schlagzäh modifiziertes Polymerisat einer vinylaromatischen Verbindung, insbesondere ein Styrolpolymerisat, (B) einen Polyphenylenether, (C) einen Flammschutzzusatz, sowie (D) - gegebenenfalls - übliche Zusatzstoffe. Charakteristisch für die erfindungsgemäßen Formmassen ist, daß die mittlere Teilchengröße der Weichkomponente des verwendeten schlagzäh modifizierten Polymerisates (A) gleich oder kleiner 0,8 µm ist. Solche Formmassen sind nicht nur ausgeprägt selbstverlöschend sondern liefern auch Formteile mit besonders brillanter Oberfläche.

EP 0 058 380 A2

Croydon Printing Company Ltd.

Selbstverlöschende thermoplastische Formmassen

Die Erfindung betrifft selbstverlöschende thermoplastische Formmassen, enthaltend

A) 70 bis 10 Gew.-Teile eines schlagzäh modifizierten Polymerisates einer vinylaromatischen Verbindung, insbesondere eines Styrolpolymerisates,

B) 30 bis 90 Gew.-Teile eines Polyphenylenethers,

C) 1 bis 20 Gew.-Teile eines Flammschutzzusatzes, sowie

D) - gegebenenfalls - übliche Zusatzstoffe in wirksamen Mengen,

die nach Entzündung mit einer heißen Flamme in wenigen Sekunden verlöschen und nicht brennend abtropfen.

Thermoplastische Formmassen, die sich zur Herstellung von Formteilen eignen, die schlagfest modifizierte Styrolpolymerisate und Polyphenylenether enthalten und selbstverlöschend sind, sind z.B. aus der DE-AS 20 37 510 und der US-PS 3 809 729 bekannt. Diese Formmassen enthalten zur Flammfestausrüstung sowohl eine aromatische Phosphorkomponente als auch eine aromatische Halogenverbindung.

Es können aber auch ohne Zusatz von Halogenverbindungen unter Verwendung von aromatischen Phosphaten und cyclischen Phosphonaten bzw. Phosphaten, wie beispielsweise in den US-PSen 3 883 613, 4 154 775 und der DE-OS 28 36 771 beschrieben, selbstverlöschende Formmassen erhalten werden.

Formteile, die aus diesen Formmassen erhalten werden, besitzen eine matte Oberfläche. Für viele Anwendungsbereiche

vG/P

sind aber Formteile mit einer glänzenden Oberfläche erwünscht.

Der vorliegenden Erfindung lag daher die Aufgabe zugrunde, thermoplastische Formmassen auf der Basis von schlagzäh modifizierten Polymerisaten einer vinylaromatischen Verbindung und Polyphenylenethern zu schaffen, die nach Entzündung mit einer heißen Flamme in wenigen Sekunden verlöschen, nicht brennend abtropfen und zu Formteilen mit einer brillanten Oberfläche, deren Aussehen weitgehend von den Verarbeitungsbedingungen unabhängig ist, führen.

Diese Aufgabe wird erfindungsgemäß gelöst durch Formmassen, die aus einem schlagzäh modifizierten Polymerisat einer vinylaromatischen Verbindung, Polyphenylenethern und einem Flammschutzzusatz bestehen, wobei die Weichkomponente des schlagzäh modifizierten Polymerisates der vinylaromatischen Verbindung eine mittlere Teilchengröße von gleich oder kleiner 0,8 μm aufweist.

Gegenstand der Erfindung sind dementsprechend selbstverlöschende thermoplastische Formmassen, enthaltend

A) 70 bis 10 Gew.-Teile wenigstens eines Polymerisates einer monovinylaromatischen Verbindung, insbesondere eines Styrolpolymerisates, und vor allem eines schlagfest modifizierten Styrolpolymerisates,

B) 30 bis 90, insbesondere 40 bis 70 Gew.-Teile eines Polyphenylenethers,

C) 1 bis 20, insbesondere 2 bis 12 Gew.-Teile eines Flammschutzzusatzes, sowie

D) - gegebenenfalls- übliche Zusatzstoffe in wirksamen Mengen.

Die erfindungsgemäßen Formmassen sind dadurch gekennzeichnet, daß die mittlere Teilchengröße der Weichkomponente gleich oder kleiner 0,8 /um, vorzugsweise kleiner 0,5 /um ist.

Unter Formmassen sollen Mischungen verstanden werden, die sich durch thermoplastische Verarbeitung innerhalb bestimmter Temperaturbereiche zu Formteilen oder zu Halbzeug verarbeiten lassen. Die Formmassen können als Granulat vorliegen, sie können aber auch pulverförmig oder durch Tablettierung vorgeformt oder in Form von Platten und Bahnen vorliegen.

Die Herstellung der in den Formmassen enthaltenden schlagfest modifizierten Styrolpolymerisate kann nach beliebigen Verfahren erfolgen, sofern dafür gesorgt ist, daß die obengenannten Teilchengrößen erhalten werden.

Die meist angewandten Verfahren, zur Herstellung schlagzäh modifizierter Styrolpolymerisate (Komponente A) sind die Polymerisation in Masse oder Lösung, wie es beispielsweise in der US-PS 2 694 692 beschrieben ist und Verfahren zur Masse-Suspensionspolymerisation, wie sie beispielsweise in der US-PS 2 862 906 beschrieben sind. Selbstverständlich sind auch andere Verfahren, wie die Polymerisation in Emulsion, anwendbar, sofern die oben genannten Teilchengröße erhalten wird.

Als monovinylaromatische Verbindungen kommen dabei insbesondere Styrol in Betracht, ferner die kern- oder seitenkettenalkylierten Styrole. Vorzugsweise wird jedoch Styrol allein verwendet.

Als Kautschuke werden die üblicherweise für die Schlagfestmodifizierung von Styrolpolymerisaten gebräuchlichen natürlichen oder synthetischen Kautschuke eingesetzt. Ge-

eignete Kautschuke im Sinne der Erfindung sind neben Naturkautschuk z.B. Polybutadien, Polyisopren und Mischpolymerisate, des Butadiens und/oder Isoprens mit Styrol und anderen Comonomeren, die eine Glastemperatur unter -20°C besitzen. Besonders eignen sich Butadien-Polymerisate mit einem 1,4--cis-Gehalt der zwischen 25 und 98 liegt.

Die Herstellung der schlagfest modifizierten Polymerisate mit dem erfindungsgemäßen Eigenschaftsbild geschieht durch Polymerisation der monovinylaromatischen Verbindungen in Gegenwart des Kautschuks. Die Polymerisation erfolgt, wie erwähnt, dabei in der Regel in an sich bekannter Weise in Masse, Lösung oder wäßriger Dispersion, wobei zunächst der Kautschuk in den polymerisierbaren Monomeren gelöst und diese Ausgangslösung polymerisiert wird.

Bei der Lösungs-Polymerisation können dieser Ausgangslösung noch bis zu maximal 50 Gew.-%, bezogen auf die eingesetzten monovinylaromatischen Verbindungen, eines indifferenten Verdünnungsmittels zugesetzt werden. Als indifferente Verdünnungsmittel sind beispielsweise aromatische Kohlenwasserstoffe oder Gemische von aromatischen Kohlenwasserstoffen geeignet. Bevorzugt werden dabei Toluol, Ethylbenzol, die Xylole oder Gemische dieser Verbindungen.

Bei der Polymerisation in wäßriger Dispersion wird im allgemeinen auf den Zusatz von Lösungsmitteln verzichtet; eine besonders günstige Ausführungsform besteht darin, die Lösung des Kautschuks in den Monomeren bis zu einem Umsatz von etwa 45 % in Masse unter Einwirkung von Scherkräften vorzupolymerisieren, diese Reaktionsmasse dann in Wasser zu suspendieren und anschließend auszupolymerisieren. Im allgemeinen wird dieses Verfahren unter Zugabe öllöslicher, in Radikale zerfallender Initiatoren, wie Benzoylperoxid, Dicumylperoxid, Di-tert.-butylperoxid, Azo-diisobutyronitril u.ä. oder Kombinationen davon ausgelöst, doch kann die Vorpolymerisation auch thermisch gestartet werden. Als Suspendiermittel dienen bekanntlich wasserlösliche, hochmolekulare Verbindungen wie Methylcellulose, Oxypropylcellulose, Polyvinylalkohol, teilverseifte Polyvinylacetate usw. oder anorganische Dispergiermittel, z.B. von Bariumsulfat. Die Suspendiermittel werden im allgemeinen in Mengen von 0,1 bis 5 Gew.-%, bezogen auf die organische Phase eingesetzt.

Bei der Polymerisation in Masse oder Lösung wird in der Regel in einem Temperaturbereich zwischen 50 und 250°C, vorzugsweise 100 bis 200°C, polymerisiert. Der Polymerisationsansatz muß dabei mindestens im ersten Abschnitt der Polymerisation, d.h. bis zu Umsätzen der monovinylaromatischen Verbindungen gleich oder kleiner 45 Gew.-% gut gerührt werden. Alle diese Polymerisationsverfahren sind hinreichend bekannt und in Einzelheiten in der Literatur beschrieben. Eine zusammenfassende Darstellung findet sich bei Amos, Polym. Engng. Sci., 14 (1974), 1. S. 1 bis 11, sowie in den US-Patentschriften 2 694 692 und 2 862 906 auf die wegen weiterer Einzelheiten verwiesen werden soll.

Unter Weichkomponente im Sinne dieser Erfindung wird der bei Raumtemperatur (25°C) in Toluol unlösliche Anteil des schlagfest modifizierten Polymerisats abzüglich etwaiger Pigmente verstanden. Die Weichkomponente entspricht also dem Gelanteil des Produktes.

Die Weichkomponente ist im allgemeinen heterogen aufgebaut; sie bildet sich in der Regel im Laufe des Herstellprozesses aus und wird in der Menge und im Zerteilungsgrad durch die Verfahrensbedingungen beeinflußt. Die zu polymerisierende Lösung des Kautschuks in den monovinylaromatischen Monomeren trennt sich bekanntlich unmittelbar nach Ein-

setzen der Reaktion in zwei Phasen, von denen die eine, eine Lösung des Kautschuks im monomeren Vinylaromaten, zunächst die kohärente Phase bildet, während die zweite, eine Lösung des Polyvinylaromaten in seinem eigenen Monomeren, in ihren Tröpfchen suspendiert bleibt. Mit steigendem Umsatz vermehrt sich die Menge der zweiten Phase auf Kosten der ersten und unter Verbrauch der Monomeren; dabei tritt ein Wechsel der Phasenkohärenz auf. Bei diesem bilden sich Tropfen von Kautschuklösung in Polyvinylaromatlösung aus; diese Tropfen halten aber ihrerseits kleinere Tropfen der jetzt äußeren Phase eingeschlossen.

Neben diesem Vorgang läuft eine Pfropfreaktion ab, bei der chemische Verknüpfungen zwischen den Kautschukmolekülen und den Polyvinylaromaten unter Bildung von Pfropf-Copolymeren aus beiden Bestandteilen gebildet werden. Dieser Vorgang ist bekannt und z.B. bei Fischer, Die angew. Makrom. Chem. 33 (1973), S. 35 bis 74, ausführlich dargestellt.

Sowohl der aufgepfropfte als auch der mechanisch eingeschlossene Anteil des Polyvinylaromaten in den Kautschukteilchen ist zur Weichkomponente zu rechnen.

Wenn die Masse ganz durchpolymerisiert ist, ist so eine in eine harte Matrix aus dem Polyvinylaromaten eingelagerte heterogene Weichkomponente entstanden, die aus gepfropften Kautschukteilchen mit Einschlüssen aus Matrixmaterial (Polyvinylaromat) besteht. Je größer die Menge des eingeschlossenen Matrix-Materials ist, um so größer ist bei konstantem Kautschukgehalt die Menge der Weichkomponente.

Diese richtet sich also nicht nur nach der Menge des eingesetzten Kautschuks, sondern auch nach der Prozeßführung

besonders vor und während der Phaseninversion. Die Einzelmaßnahmen sind prozeßspezifisch und dem Fachmann bekannt (siehe z.B. Freeguard, Brit. Polym. J. 6 (1974) S. 203 bis 228; Wagner, Robeson, Rubber Chem. Techn. 43 (1970), 1129 ff).

Um zu schlagfesten thermoplastischen Formmassen mit den erfindungsgemäßen Eigenschaftsmerkmalen zu gelangen, wird die Menge an Kautschuk, die vor der Polymerisation in den Monomeren unter Herstellung der Ausgangslösung gelöst wird, in Abhängigkeit von dem Endumsatz bei der Polymerisation so gewählt, daß der Weichkomponentengehalt im resultierenden schlagfest modifizierten Polymerisat der monovinylaromatischen Verbindungen mindestens 20 Gew.-%, vorzugsweise 25 Gew.-% und mehr, bezogen auf das schlagfest modifizierte Polymerisat, beträgt. Die Obergrenze des Weichkomponentengehalts ist durch die Forderung, daß der Polyvinylaromat die kohärente Phase bilden muß, zu etwa 50 bis 60 Gew.-% gegeben. Für die erfindungsgemäßen thermoplastischen Formmassen hat sich dabei ein Weichkomponentengehalt von 25 bis 35 Gew.-%, bezogen auf das schlagfest modifizierte Polymerisat, als besonders günstig erwiesen. Der Kautschuk-Anteil des schlagfest modifizierten Polymerisats beträgt dann im allgemeinen zwischen 2 und 15 Gew.-%, vorzugsweise von 5 bis 12 Gew.-%.

Wie dargelegt und hinreichend bekannt, bestehen die schlagfest modifizierten Polymerisate der monovinylaromatischen Verbindungen aus einer einheitlichen umhüllenden Phase (Matrix) aus dem Polymerisat der monovinylaromatischen Verbindung, in die als disperse Phase die Kautschukteilchen der Weichkomponente eingebettet sind, wobei die Kautschuk-Teilchen partiell vernetzt und in mehr oder weniger starkem Maße während der Polymerisation durch die monovinylaromatischen Verbindungen gepfropft worden sind.

Die Bestimmung der mittleren Teilchengröße der dispersen Weichkomponente kann z.B. durch Auszählung und Auswertung elektronenmikroskopischer Dünnschichtaufnahmen der schlagfest modifizierten Polymerisate erfolgen (vgl. F. Lenz, Zeitschrift für Wiss. Mikroskopie, 63 (1956), S. 50/56).

Die Einstellung der Teilchengröße der dispersen Weichkomponenten-Phase erfolgt dabei in an sich bekannter Weise bei der Polymerisation der monovinylaromatischen Verbindungen durch Anpassen der Rührgeschwindigkeit im ersten Abschnitt der Polymerisation, d.h. bis zu einem Umsatz der Monomeren von gleich oder kleiner als 45 %. Dabei ist die Teilchengröße der dispersen Weichkomponenten-Phase um so größer, je kleiner die Rührerdrehzahl und damit je kleiner die Scherbeanspruchung ist. Der Zusammenhang zwischen der Rührgeschwindigkeit und der Größe und Verteilung der Kautschukteilchen im resultierenden schlagfesten Polymerisat ist z.B. in der zitierten Arbeit von Freeguard beschrieben, auf welche hinsichtlich weiterer Einzelheiten verwiesen wird. Die betreffende notwendige Rührgeschwindigkeit zur Erzielung der gewünschten Teilchengröße der dispersen Weichkomponenten-Phase hängt unter anderem von den jeweiligen Apparateverhältnissen ab und ist dem Fachmann bekannt bzw. läßt sich durch ein paar einfache Versuche bestimmen.

Wird die Weichphase der Komponente A in Emulsion hergestellt, so erfolgt dies im allgemeinen in zwei Stufen. Hierzu wird zunächst eine Pfropfgrundlage hergestellt.

Zunächst wird in der Grundstufe ein Kautschuklatex auf herkömmliche Weise hergestellt. Der Grundkautschuk ist durch seine Glastemperatur definiert, die unterhalb von $-40^{o}C$, vorzugsweise unterhalb von $-60^{o}C$ liegen soll. Als Monomeres wird vorzugsweise Butadien allein verwendet. Da für

manche Zwecke Butadien-Styrol bzw. Butadien-Acrylnitril--Kautschuke Vorteile zeigen, können auch Monomeren-Gemische aus Butadien und Styrol bzw. Acrylnitril eingesetzt werden, die vorzugsweise zwischen 99 und 90 Gew.-%, bezogen auf das Gemisch, Butadien enthalten.

Die Polymerisation wird wie üblich bei Temperaturen zwischen 30 und 90°C durchgeführt, in Gegenwart von Emulgatoren, wie z.B. Alkalisalzen von Alkyl- oder Alkylarylsulfonaten, Alkylsulfonaten, Fettalkoholsulfonaten oder Fettsäuren mit 10 bis 30 Kohlenstoffatomen; vorzugsweise nimmt man Natriumsalze von Alkylsulfonaten oder Fettsäuren mit 12 bis 18 Kohlenstoffatomen. Die Emulgatoren werden in Mengen von 0,3 bis 5, insbesondere von 1,0 bis 2,0 Gew.-%, bezogen auf die Monomeren, verwendet. Es werden die üblichen Puffersalze, wie Natriumbicarbonat und Natriumpyrophosphat, verwendet.

Ebenso werden die üblichen Initiatoren, wie Persulfate oder organische Peroxide mit Reduktionsmitteln verwendet, sowie gegebenenfalls Molekulargewichtsregler, wie Mercaptane, Terpinole oder dimeres α-Methylstyrol, die am Anfang oder während der Polymerisation zugegeben werden. Das Gewichtsverhältnis Wasser zu Monomere liegt vorzugsweise zwischen 2 : 1 und 1 : 1. Die Polymerisation wird so lange fortgesetzt, bis mehr als 90 %, vorzugsweise mehr als 96 % der Monomeren polymerisiert sind. Dieser Umsatz ist im allgemeinen nach 4 bis 20 Stunden erreicht. Der dabei erhaltene Kautschuklatex hat eine Teilchengröße, die unterhalb von 0,20 µm, vorzugsweise unter 0,15 µm, liegt. Die Teilchengrößenverteilung solcher Kautschuklatices ist verhältnismäßig eng, so daß man von einem nahezu monodispersen System sprechen kann.

Dieser Kautschuklatex kann nun agglomeriert oder als Saatlatex eingesetzt oder direkt der Pfropfreaktion mit Styrol unterworfen werden.

Zur Herstellung des Pfropfmischpolymerisates wird dann in einem zweiten Schritt in Gegenwart des so erhaltenen Latex des Butadien-Polymerisats Styrol polymerisiert. Es ist vorteilhaft, diese Pfropfmischpolymerisation von Styrol auf das als Pfropfgrundlage dienende Butadien-Polymerisat wieder in wäßriger Emulsion unter den üblichen, oben aufgeführten Bedingungen durchzuführen. Die Pfropfmischpolymerisation kann zweckmäßig im gleichen System erfolgen wie die Emulsionspolymerisation zur Herstellung der Pfropfgrundlage, wobei, falls notwendig, weiterer Emulgator und Initiator zugegeben werden kann. Das aufzupfropfende Styrol kann dem Reaktionsgemisch auf einmal, absatzweise in mehreren Stufen oder vorzugsweise kontinuierlich während der Polymerisation zugegeben werden. Die Pfropfmischpolymerisation von Styrol in Gegenwart des Butadien-Polymerisats wird so geführt, daß ein Pfropfgrad von 25 bis 45 Gew.-%, vorzugsweise von 30 bis 40 Gew.-%, im Pfropfmischpolymerisat resultiert. Da die Pfropfausbeute bei der Pfropfmischpolymerisation nicht 100 %ig ist, muß eine etwas größere Menge des Styrols bei der Pfropfmischpolymerisation eingesetzt werden, als es dem gewünschten Pfropfgrad entspricht. Die Steuerung der Pfropfausbeute bei der Pfropfmischpolymerisation und somit des Pfropfgrades des fertigen Pfropfmischpolymerisates ist jedem Fachmann geläufig und kann beispielsweise u.a. durch die Dosiergeschwindigkeit der Monomeren oder durch Reglerzugabe erfolgen (Chauvel, Daniel, ACS Polymer Preprints 15 (1974), Seite 329 ff). Bei der Emulsions-Pfropfmischpolymerisation entstehen im allgemeinen etwa 5 bis 15 Gew.-%, bezogen auf das Pfropfmischpolymerisat, an freiem, ungepfropftem Styrolpolymerisat. Je nach den bei der Pfropf-

mischpolymerisation für die Herstellung der Pfropfmischpolymerisate gewählten Bedingungen kann es möglich sein, daß bei der Pfropfmischpolymerisation schon ein hinreichender Anteil an Matrix gebildet worden ist. Im allgemeinen wird es jedoch nötig sein, die bei der Pfropfmischpolymerisation erhaltenen Produkte mit zusätzlicher, separat hergestellter Hartkomponente zu mischen.

Bei der separat hergestellten Hartkomponente der Komponente A) kann es sich um ein Styrolpolymerisat oder ein $\alpha$-Methylstyrol/Styrolcopolymerisat handeln. Diese Polymerisate können einzeln oder auch in Mischung miteinander für die Matrix eingesetzt werden, so daß es sich bei der Matrix der erfindungsgemäßen Mischungen beispielsweise um eine Mischung aus einem Styrolpolymerisat und einem $\alpha$-Methylstyrol/Styrolcopolymerisat handeln kann.

Die Matrix kann nach den herkömmlichen Methoden erhalten werden. So kann die Polymerisation des Styrols und/oder -Methylstyrols in Masse, Lösung, Suspension oder wäßriger Emulsion durchgeführt werden. Die Matrix hat vorzugsweise eine Viskositätszahl von 40 bis 100, insbesondere von 50 bis 85 ml/g. Die Bestimmung der Viskositätszahl erfolgt analog DIN 53 726; dabei werden 0,5 g Material in 100 ml Toluol gelöst.

Das Mischen des Pfropfmischpolymerisates mit der Matrix kann nach jeder beliebigen Weise nach allen bekannten Methoden erfolgen. Wenn die Komponenten z.B. durch Emulsions-Polymerisation hergestellt worden sind, ist es z.B. möglich, die erhaltenen Polymer-Dispersionen miteinander zu vermischen, darauf die Polymerisate gemeinsam auszufällen und das Polymerisat-Gemisch aufzuarbeiten. Vorzugsweise geschieht jedoch das Mischen durch gemeinsames Extrudieren, Kneten oder Verwalzen der Komponenten, wobei

die Komponenten notwendigenfalls zuvor aus der bei der Polymerisation erhaltenen Lösung oder wäßrigen Dispersion isoliert worden sind. Die in wäßriger Dispersion erhaltenen Produkte der Pfropfmischpolymerisationen können auch nur teilweise entwässert werden und als feuchte Krümmel mit der Matrix vermischt werden, wobei dann während des Vermischens die vollständige Trocknung der Pfropfmischpolymerisate erfolgt.

Die mittlere Teilchengröße (Gewichtsmittel) der dispersen Weichkomponenten-Phase wurde bestimmt durch Auszählen und Mitteln der zur gleichen Größenklasse (konst. Intervallbreite) gehörigen Teilchen aus elektronenmikroskopischen Dünnschichtaufnahmen. Mit den Volumina der Teilchen (3. Potenz des scheinbaren Durchmessers) innerhalb der Intervalle wird die Verteilungssummenkurve bestimmt. Beim 50 %-Ordinatenwert kann auf der Abszisse der Äquivalentdurchmesser dann abgegriffen werden. Die angegebenen mittleren Durchmesser stellen dabei einen Mittelwert von mindestens 5000 Teilchen dar.

Als Komponente (B) kommen Polyphenylenether auf der Basis von in ortho-Position disubstituierten Polyphenylenoxiden in Frage, wobei der Ethersauerstoff der einen Einheit an den Benzolkern der benachbarten Einheit gebunden ist. Dabei sollen mindestens 50 Einheiten miteinander verknüpft sein. Die Polyphenylenether können in ortho-Stellung zum Sauerstoff, Wasserstoff, Halogen, Kohlenwasserstoffe, die kein $\alpha$-ständiges tertiäres Wasserstoffatom besitzen, Halogenkohlenwasserstoffe, Phenylreste und Kohlenwasserstoff-oxi-Reste tragen. So kommen in Frage: Poly(2,6-dichlor-1,4-phenylen)-ether, Poly(2,6-diphenyl-1,4-phenylen)ether, Poly(2,6-dimethoxy-1,4-phenylen)ether, Poly(2,6-dimethyl-1,4-phenylen)ether, Poly(2,6-dibrom-1,4-phenylen)ether. Bevorzugterweise wird der Poly(2,6-dimethyl-1,4-phenylen)ether

eingesetzt. Besonders bevorzugt sind dabei Poly(2,6-dimethyl-1,4-phenylen)ether mit einer Grenzviskosität von 0,40 bis 0,65 dl/g (gemessen in Chloroform bei 30°C).

Die Polyphenylenether können z.B. in Gegenwart von komplexbildenden Mitteln wie Kupferbromid und sek. Dibutylamin aus den Phenolen hergestellt werden.

Als Flammschutzzusatz, Komponente C), der erfindungsgemäßen Formmassen kommen phosphorhaltige Verbindungen alleine und/oder halogenenthaltende Flammschutzmitteln in Betracht. Geeignet sind beispielsweise Verbindungen, in denen der Phosphor die Oxidationsstufe +1 besitzt, wie z.B. die Hypophosphite, wobei es sich bei den Kationen um Elemente der I., II., III. Hauptgruppe, der I. bis VIII. Nebengruppe des Periodischen Systems, um die Gruppe der Lanthaniden, um Germanium, Zinn, Blei, Antimon und Wismut handeln kann.

Unter Periodischem System der Elemente soll das System von Mendelejew verstanden werden, das in dem Lehrbuch "Anorganische Chemie" von F.A. Cotton, G. Wilkinson, Verlag Chemie (1967) wiedergegeben ist.

Des weiteren kommen Doppelphosphite mit der Struktur $CeMe(H_2PO_2)_6$ in Frage, wobei Me = Erbium, Thulium, Ytterbium und Lutetium sein kann. Es können auch komplexe Hypophosphite verwendet werden, wie beispielsweise $Me[Zr(H_2PO_2)_6]$, $Me[Hf(H_2PO_2)_6]$, wobei Me = Magnesium, Calcium, Mangan, Cobalt, Nickel, Eisen, Zink und Cadmium sein kann.

Neben diesen anorganischen Hypophosphiten kommen auch organische Hypophosphite in Frage. Geeignet sind z.B. Cellulosehypophosphitester, Polyvinylalkoholhypophosphit-

ester, Ester der hypophosphorigen Säure und Diolen, wie z.B. von 1,10-Dodecyldiol.

Ganz besonders geeignet ist Calciumhypophosphit.

Als Komponente C) kommen aber auch aromatische Phosphorverbindungen in Frage mit der allgemeinen Formel

$$R^1-\overset{\overset{\displaystyle O}{\|}}{\underset{\underset{\displaystyle R^2}{|}}{P}}-R^3$$

worin $R^1$, $R^2$ und $R^3$ gleich oder verschieden und Aryl, Alkyl, Cycloalkyl, alkylsubstituierter Aryl, halogensubstituierter Aryl, arylsubstituierter Alkyl, Halogen, Wasserstoff, die entsprechenden Aryloxi-, Alkyloxi-, Cycloalkyloxi-Reste und deren Kombinationen sind, wobei mindestens ein Rest ein Aryl- bzw. Aryloxi-Rest ist, wie beispielsweise Triphenylphosphinoxid, Phenylbisdodecylphosphat, Phenylbisneopentylphosphat, Phenylethylenhydrogenphosphat, Phenyl-bis(3,5,5-trimethylhexylphosphat), Ethyldiphenylphosphat, 2-Ethyl-hexyldi(tolyl)-phosphat, Diphenylhydrogenphosphat, Bis-(2-ethylhexyl)-p-tolyl-phosphat, Tritolylphosphat, Bis(2-ethylhexyl)-phenylphosphat, Tri-(nonylphenyl)phosphat, Phenylmethylhydrogenphosphat, Di-(dodecyl-p--tolyl)phosphat, Tricresylphosphat, Triphenylphosphat, Dibutylphenylphosphat, 2-Chlor-ethyldiphenylphosphat, p-Tolyl-bis(2,5,5-trimethylhexyl)phosphat, 2-Ethylhexyldiphenylphosphat, Diphenylhydrogenphosphat. Besonders geeignet sind Phosphorverbindungen, bei denen jedes R ein Aryloxi- bzw. Aryl-Rest ist. Ganz besonders ist dabei Triphenylphosphinoxid und Triphenylphosphat geeignet.

Des weiteren kann es sich bei der Komponente C) um cyclische Phosphate bzw. Phosphonate oder einfache Phosphonate handeln, wie sie beispielsweise in den US-PS 30 90 799 und 3 141 032 beschrieben sind.

Als besonders geeignet erweisen sich dabei das Diphenylpentaerythritol-diphosphat und das Diphenylphenylphosphonat.

Die Komponente C kann des weiteren noch ein übliches halogenhaltiges Flammschutzmittel sein. In Frage kommen dabei Halogen enthaltende organische Verbindungen, wie sie z.B. in der Monographie von H. Vogel "Flammfestmachen von Kunststoff", Hüthing-Verlag, 1966, auf den Seiten 94 bis 102 beschrieben sind. Es kann sich dabei aber auch um halogenierte Polymere, wie z.B. halogeniertes Polyphenylenoxid oder bromierte Oligo- bzw. Polystyrole, handeln. Die Verbindungen sollen mehr als 30 Gew.-% Halogen enthalten, vorzugsweise mehr als 40 Gew.-% Chlor bzw. mehr als 50 Gew.-% Brom. Besonders gut geeignete Flammschutzmittel sind Hexabromcyclododecan, Octabromhexadecan, Bis-(tribromphenoxy)-ethan, chloriertes Paraffin mit etwa 70 Gew.% Chlor, halogenhaltige Diels-Alder-Addukte, halogenhaltige Diphenyle, wie sie in der DE-OS 23 28 517, in US-PS 3 894 988 bzw. 3 892 710 beschrieben sind, sowie bromiertes Oligostyrol nach US-PS 4 143 221.

Im Falle des Einsatzes der halogenhaltigen Flammschutzmittel empfiehlt es sich, einen Synergisten zu verwenden, wie Verbindungen des Antimons, wie Antimontrioxid, Antimontrichlorid, Antimontrijodid, Antimonoxichlorid, des Arsens, wie Arsentrioxid und Arsenpentoxid, des Bors, wie Zinkborat, des Zinns, wie Zinn-II-oxihydrat und Zinndioxid und -tetraoxid. Diese Synergisten werden im allgemeinen in Mengen von 0,5 bis 10 Gew.-%, bezogen auf die thermoplastische Formmasse eingesetzt.

Die Mischungen können als Komponente D) weitere Zusatzstoffe, wie Pigmente, Füllstoffe, Oligo- und Polymere, Antistatika, Antioxidantien und Schmiermittel enthalten.

Neben dem Begriff "Oxidationsstufe" können noch andere Begriffe, wie Oxidationszahl, Ladungszahl und ähnliche verstanden werden, wie sie in dem Lehrbuch der anorganischen Chemie von A.F. Hollemann, E. Wiberg, Walter de Gruyter und Co. (1964, 57. bis 70. Auflage), S. 166 bis 177, wiedergegeben sind.

Man stellt die erfindungsgemäßen thermoplastischen Formmassen wie üblich auf Vorrichtungen, die ein homogenes Mischen zulassen, wie Knetern, Extrudern oder Walzenmischgeräten her.

Neben der Eigenschaft der Selbstverlöschung besitzen Formteile aus den erfindungsgemäßen Formmassen eine homogene glänzende Oberfläche.

Die erfindungsgemäßen Massen lassen sich nach den für die Thermoplastverarbeitung üblichen Verfahren, wie z.B. Extrusion und Spritzgießen, zu den verschiedenartigsten Formkörpern, wie z.B. zu Gehäusen von Elektrogeräten wie Fernschreibern und Fernsehern verarbeiten.

Die Erfindung wird durch die nachfolgenden Beispiele näher erläutert. Die in den Beispielen genannten Teile und Prozente beziehen sich, sofern nicht anders angegeben, auf das Gewicht.

Die Flammschutzprüfung erfolgt im vertikalen Brandtest nach den Vorschriften der Underwriter Laboratories zwecks Einordnung in eine der Brandklassen 94 VE-0, 94 VE-1 oder 94 VE-2.

Zur Beurteilung des Oberflächenglanzes wurden aus den Mischungen mittels einer Spritzgußmaschine bei den im folgenden angegebenen Temperaturen Platten mit den Abmessungen 50 x 40 x 2 mm hergestellt. An den Probekörpern wurde der Glanz durch Reflektionsmessung mit einem Lange-Fotometer bestimmt. Die Einfalls- und Reflektionswinkel betrugen jeweils 60°. Als Standard diente weißes Vliespapier (= 0 %) und ein Schwarzglasspiegel (= 100 %).

<u>Beispiele und Vergleichsversuche</u>

Ein schlagfestes Polystyrol mit einer mittleren Teilchengröße $\leq$ 0,5 $\mu$m wird mit folgender Rezeptur erhalten:

In einem 5 l-Rührkessel mit Blattrührer wurde eine Lösung bestehend aus

| | | |
|---|---|---|
| 1.560 | g | Styrol |
| 240 | g | Bu/S-Blockpolymerisat mit verschmiertem Übergang zwischen den Blöcken: [ ] = 1,74 [dl/g] (Toluol 25°C); Blockpolystyrol = 31,0 %; [ ] = 0,364 [dl/g] (Toluol 25°C); Gesamtstyrolgehalt = 41,6 % |
| 1,6 | g | t-Dodecylmercaptan |
| 2,2 | g | Octadecyl-3(3',5'-ditert.-butyl-4-hydroxiphenyl)-propionat |
| 1,7 | g | Dicumylperoxid |

bei 110°C Innentemperatur und einer Rührerdrehzahl von 150 Upm bis zu einem Feststoffgehalt von 43,8 Gew.-% vorpolymerisiert.

Anschließend wurden 1.800 ml Wasser, die 9,0 g Polyvinylpyrrolidon vom K-Wert 90 und 1,8 g $Na_4P_2O_7$ enthielten, zugesetzt und die Rührerdrehzahl auf 300 Upm erhöht. Durch

Nachpolymerisation von 5 Stunden bei 120°C und 5 Stunden bei 140°C wurde bis zu einem Styrolumsatz 99 % auspolymerisiert.

Ein schlagfestes Polystyrol mit einer mittleren Teilchengröße von ca. 1 µm wird nach folgender Rezeptur hergestellt:

In einer 2-Kessel-2-Turmkaskade wurde eine Mischung von 7,2 Gew.-Teilen eines Polybutadiens mit einem cis-Anteil von 98 %, zusammen mit 85,7 Gew.-Teilen Styrol, 6 Gew.--Teilen Ethylbenzol und 0,1 Teilen Octadecyl-3-(3',5'-di--tert.-butyl-4'-hydroxiphenyl)-propionat thermisch polymerisiert. Der Durchsatz betrug 4 l/Stunde. Die in den einzelnen Reaktoren angewendeten Rührgeschwindigkeiten, Temperaturen sowie die eingestellten integralen Umsätze sind unten aufgeführt. In den dritten Reaktor wurden dem Polymerstrom 0,02 Gew.-% tert.-Dodecylmercaptan, bezogen auf Styrol, kontinuierlich zudosiert. Die Polymerisatmischung wurde nach der Polymerisation in einer Entgasungzone bei 220 bis 240°C vom Lösungsmittel und Restmonomeren befreit.

| Ort | Rührgeschwindigkeit [Upm] | Temp. [°C] | Umsatz (Integral) |
|---|---|---|---|
| 1. Rührreaktor | 100 | 104 | 3,8 |
| 2. Rührreaktor | 160 | 132 | 20,3 |
| 1. Turm | 15 | 101 | 55,3 |
| 2. Turm | 3 | 127 | 84,3 |
| Entgasung | - | 250 | - |

Die in der Tabelle angegebenen Gewichtsteile an schlagfest modifiziertem Polystyrol (Komponente A)), Poly(2,6-dimethyl-1,4-phenylen)ether (Komponente B)) und an Flammschutzzusatz (Komponente C)) werden auf einem Zweiwellenextruder

bei 280°C aufgeschmolzen, homogenisiert, gemischt und granuliert. Der Poly(2,6-dimethyl-1,4-phenylen)-ether hatte eine Grenzviskosität von 0,49 dl/g (gemessen in Chloroform bei 30°C).

0058380

Tabelle

| Beispiele (erfindungsgemäß) | Komponente A) [Gew.-Tle.] | mittlere Teilchengröße [µm] | Komponente B) [Gew.-Teile] | Komponente C) Art | Komponente C) [Gew.-Tle.] | Brandklasse nach UL-94 | Glanz [%] Spritztemperatur [°C] 270 | Glanz [%] Spritztemperatur [°C] 300 |
|---|---|---|---|---|---|---|---|---|
| 1 | 60 | 0,5 | 40 | Calciumhypophosphit | 4 | VE-1 | 85 | 87 |
| 2 | 50 | 0,5 | 50 | | 7 | VE-0 | 84 | 89 |
| 3 | 60 | 0,5 | 40 | Triphenylphosphat | 5 | VE-1 | 83 | 85 |
| 4 | 50 | 0,5 | 50 | | 10 | VE-0 | 86 | 88 |
| 5 | 50 | 0,5 | 50 | Triphenylphosphinoxid | 8 | VE-0 | 85 | 88 |
| **Vergleichsversuche (nicht erfindungsgemäß)** | | | | | | | | |
| A | 60 | 1 | 40 | Calciumhypophosphit | 4 | VE-1 | 22 | 44 |
| B | 50 | 1 | 50 | | 7 | VE-0 | 23 | 34 |
| C | 60 | 1 | 40 | Triphenylphosphat | 5 | VE-1 | 13 | 32 |
| D | 50 | 1 | 50 | | 10 | VE-0 | 25 | 41 |
| E | 50 | 1 | 50 | Triphenylphosphinoxid | 8 | VE-0 | 29 | 40 |

Patentanspruch

Selbstverlöschende thermoplastische Formmassen, enthaltend

(A) 70 bis 10 Gew.-Teile eines schlagzäh modifizierten Polymerisates einer vinylaromatischen Verbindung,

(B) 30 bis 90 Gew.-Teile eines Polyphenylenethers,

(C) 1 bis 20 Gew.-Teile eines Flammschutzzusatzes, sowie

(D) - gegebenenfalls - übliche Zusatzstoffe in wirksamen Mengen,

dadurch gekennzeichnet, daß die mittlere Teilchengröße der Weichkomponente des verwendeten schlagzäh modifizierten Polymerisates (A) gleich oder kleiner 0,8 $\mu$m ist.